**Europäisches Patentamt**

**European Patent Office**

**Office européen des brevets**

(19)

(11) Publication number : **0 358 233 B1**

# EUROPEAN PATENT SPECIFICATION

(12)

(45) Date of publication of patent specification :
**11.11.92 Bulletin 92/46**

(51) Int. Cl.⁵ : **F02B 77/08,** G01M 15/00,
G01M 3/24

(21) Application number : **89116681.1**

(22) Date of filing : **08.09.89**

(54) Method and device for checking the valve and piston ring sealing in an internal combusion engine.

(30) Priority : **09.09.88 IT 6780488**

(43) Date of publication of application :
**14.03.90 Bulletin 90/11**

(45) Publication of the grant of the patent :
**11.11.92 Bulletin 92/46**

(84) Designated Contracting States :
**DE ES FR GB IT NL SE**

(56) References cited :
**DE-A- 2 905 197**
**FR-A- 2 079 567**
**GB-A- 1 121 824**
**GB-A- 2 089 982**
**US-A- 3 500 676**

(73) Proprietor : **IVECO FIAT S.p.A.**
**Via Puglia 35**
**I-10156 Torino (IT)**

(72) Inventor : **Ansaldi,Ermanno**
**via Cavallermaggiore 19**
**10100 Torino (IT)**
Inventor : **De Cristofaro, Francesco**
**Via Frejus 42**
**10043 Orbassano (IT)**
Inventor : **Pratico', Mario**
**Via Ragusa 5**
**10100 Torino (IT)**

(74) Representative : **Jorio, Paolo et al**
**STUDIO TORTA Società Semplice Via Viotti 9**
**I-10121 Torino (IT)**

EP 0 358 233 B1

## Description

This invention relates to a method and device for checking the valve and piston ring sealing in an internal combustion engine. More particularly, the invention relates to a method and device for checking that the valves connected between an internal combustion engine combustion chamber and the respective intake and exhaust manifolds and the piston rings mounted on the piston of each cylinder of said engine seal correctly. GR-A-2 089 982 discusses electro-acoustic leak detection in engines. US-A-3 500 676 gives an example of ultrasonic leak detection.

Prior methods have been studied by the Applicant which use signals of ultrasonic frequency for checking correct operation of internal combustion engine valves. Although these methods have particular advantages, they require certain preliminary operations to be carried out such as the removal of certain components (generally the injectors or spark plugs) before making the measurement (and their consequent remounting when the check has been carried out).

In addition, such methods are not particularly suitable for carrying out such checks on engines mounted on motor vehicles. The object of the present invention is to provide a method and device for confirming correct sealing of internal combustion engine valves and piston rings, which are able to overcome the drawbacks of known methods.

Said object is attained according to the present invention by a method for checking the sealing of the valves and/or piston rings of each cylinder of an internal combustion engine, said cylinder comprising a combustion chamber in which there are located at least one first valve and at least one second valve mobile within respective seats and which externally communicates through said seats with a first duct and with a second duct respectively, and further comprising a piston provided with respective piston rings, characterised by comprising the following operations in sequence:
  - causing said engine to undergo at least one complete cycle without the engine being fed, in order to cyclically induce an overpressure in the combustion chamber of each said cylinder; and
  - measuring, in said intake duct and/or in said exhaust duct and/or in a compartment communicating with that portion of said piston distant from said combustion chamber with respect to said piston rings, the intensity of an ultrasonic signal generated by the effect of an undue seepage of pressurised air between said combustion chamber and said intake duct and/or said exhaust duct and/or said compartment, through said seats and through said piston rings respectively.

The present invention also relates to a device for checking the sealing of the valves and piston rings of each cylinder of an internal combustion engine, said cylinder comprising a combustion chamber in which there are located at least one first valve and at least one second valve mobile within respective seats and which externally communicates through said seats with a first duct and with a second duct respectively, and further comprising a piston provided with respective piston rings, characterised by comprising:
  - first means to be connected to said ducts and to a compartment communicating with that portion of each said piston distant from said combustion chamber with respect to said piston rings, in order to measure the intensity of an ultrasonic signal which propagates within them by way of the seats of said valves and by way of said piston rings respectively;
  - second angular position measurement means to be connected to a member of said engine which moves synchronously with said cylinders; and
  - third means connected to said first means and to said second means to provide an indication of the presence of said ultrasonic signal and from which valve and/or piston rings of the respective cylinder it originates.

The invention will be more apparent from the description of a preferred embodiment thereof given hereinafter by way of non-limiting example with reference to the accompanying drawings in which:
    Figure 1 is a diagrammatic illustration of an internal combustion engine in which part of the device of the present invention is installed;
    Figure 2 is a diagrammatic section on the line II-II of Figure 1;
    Figure 3 is a block diagram of the device of the present invention shown in one applicational example; and
    Figure 4 shows three diagrams relative to quantities measured by the device of Figure 3 under different operating conditions.

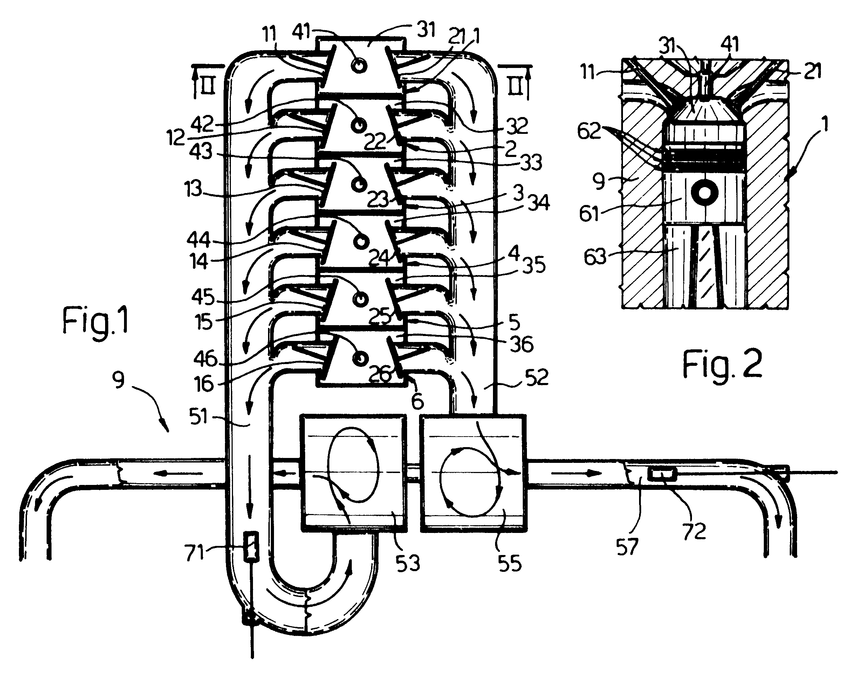

In Figure 1 the reference numeral 1 indicates overall an internal combustion engine, conveniently of the compression ignition type. The engine 9 has six cylinders indicated respectively by the reference numerals 1, 2, 3, 4, 5, 6, each being provided with respective intake valves 11, 12, 13, 14, 15, 16 and with exhaust valves 21, 22, 23, 24, 25, 26 which are housed in corresponding combustion chambers 31, 32, 33, 34, 35, 36 provided with injectors 41, 42, 43, 44, 45, 46.

Each combustion chamber is connected by way of its own valves to an intake duct 51 and to an exhaust duct 52 of the engine 9. The duct 51 is connected in known manner to a compressor 53, and the duct 52 is connected via a turbine 55 to the exhaust pipe 57 for the gaseous combustion products.

Figure 2 is a diagrammatic illustration of the cylinder 1 and showing in particular a piston 61 slidable within the cylinder 1 and provided with piston rings 62 which separate in a sealed manner the combustion chamber 31 from an underlying chamber 63 which when in use communicates with the engine oil sump.

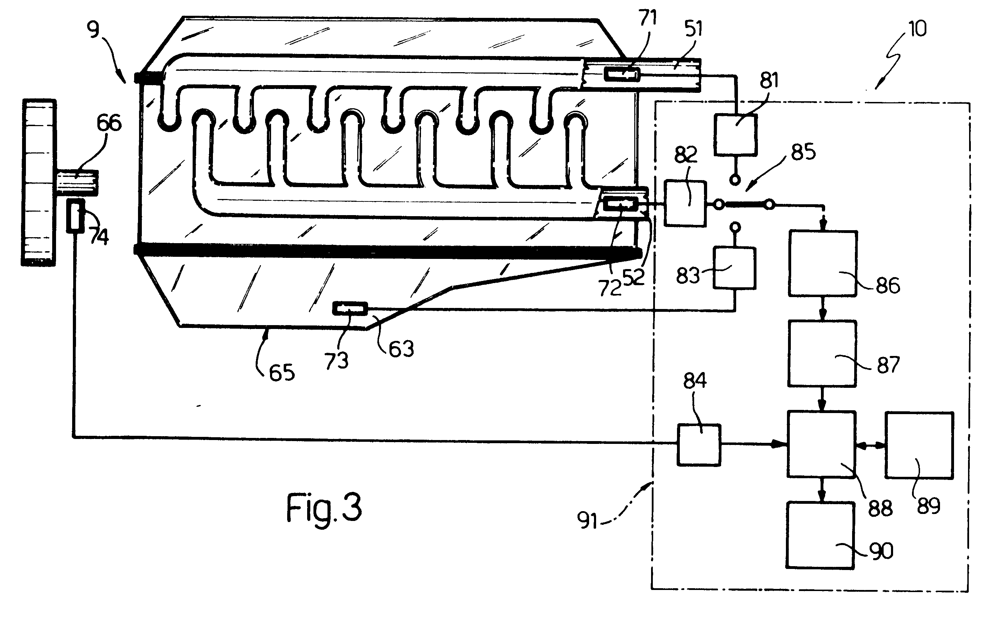

Figure 3 is a diagrammatic illustration of the engine 9 showing in particular the intake duct 51 and discharge duct 53, the oil sump 65 and a portion 66 of the camshaft (with relative flywheel).

According to the present invention the reference numeral 10 indicates overall a device able to check the sealing of the valves and piston rings of the engine 9. The device 10 comprises essentially three ultrasound transducers 71, 72, 73 and a position transducer 74 arranged to provide an indication of the angular position of the shaft 66.

For example, the transducers 71, 72, 73 could be sensors able to detect the presence of ultrasonic signals within a frequency range of between for example 35 kHz and 45 kHz, whereas the transducer 74 could conveniently be a phonic wheel, or an encoder, or a resolver, or an inductive sensor placed close to the toothed wheel of the engine flywheel etc.

Each transducer 71, 72, 73 is connected to the input of a respective amplifier 81, 82, 83. The outputs of the amplifiers 81, 82, 83 are connected to respective switching terminals of a three-way switch 85, the common terminal of which is connected to the input of a filter 86, for example of high-pass type (with cut-off frequency of about 25 kHz) or of band-pass type (with cut-off frequencies lower than 30 kHz and higher than 40 kHz respectively).

The transducer 74 is connected to the input of a signal conditioner 84, such as a squaring circuit.

The output of the filter 86 is connected by way of a rectifier and levelling circuit 87 to an input of a computing unit 88 provided with a memory 89. The unit 88 comprises for example a microprocessor and is provided with a further input to which the output signal generated by the signal conditioner 84 is fed, and an output connected to a display and/or recording unit 90.

The amplifiers 81, 82, 83, the signal conditioner 84, the filter 86, the circuit 87, the computing unit 88, the memory 89 and the display unit 90 form overall a unit 91 for processing the signals generated by the transducers 71, 72, 73, 74 for the purpose of checking the sealing of the valves and/or piston rings as specified hereinafter.

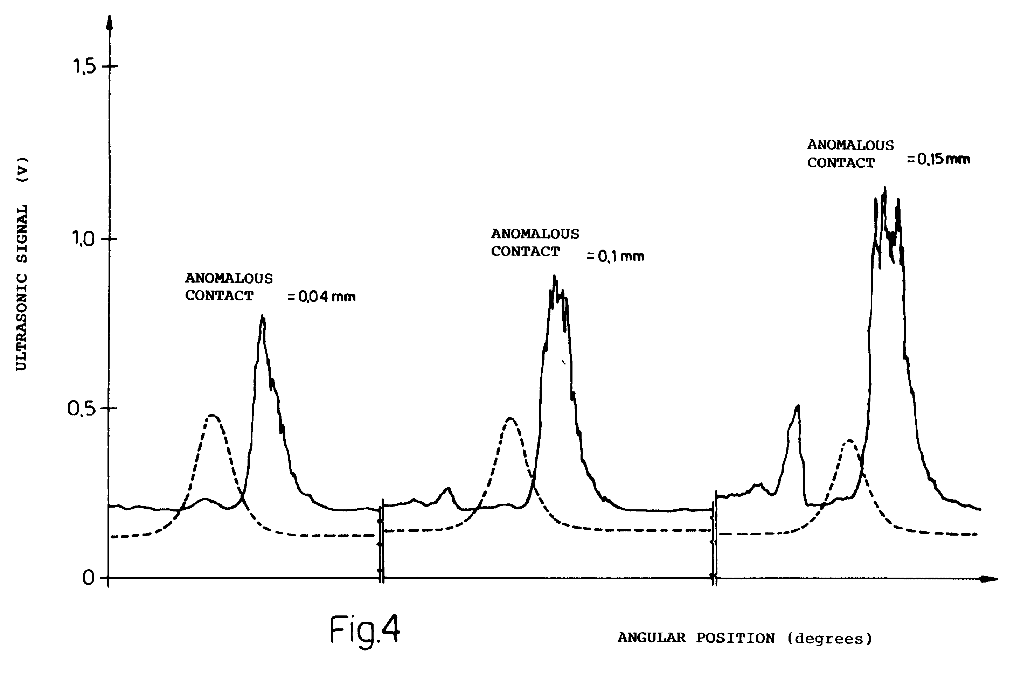

Figure 4 shows the variation in an ultrasonic signal measured by the transducer 71 under three different interference conditions (0.04 mm, 0.1 mm and 0.15 mm respectively) between an intake valve and the relative tappet, and correlated with the variation in the angular position of the camshaft 66 as measured by the position transducer 74.

The method of the present invention is described hereinafter. It should firstly be noted that if a loss of seal occurs at the intake valves and/or exhaust valves (due to their wear or to anomalous contact with the respective tappets) and/or at the piston rings (due to their wear), an undue seepage occurs from the combustion chamber in the direction of the intake and/or exhaust ducts and/or oil sump, with consequent generation of ultrasonic signals.

Detection of said ultrasonic signals is done by the transducers 71, 72, 73 and is associated with the indication provided by the transducer 74 to correlate the "presence of ultrasonic signal" event with a predetermined angular position of the camshaft 66 to identify which valve and/or piston ring generates said ultrasonic signal.

The detected ultrasonic signal is amplified by the amplifiers 81, 82, 83, filtered by the filter 86, rectified and levelled in the circuit 87 and fed to the unit 88. According to a preferred manner of operation this latter, with a certain sampling frequency (for example 5 kHz), acquires the signals from each transducer 71, 72, 73 and establishes a "start" instant and a "stop" instant in the ultrasonic signal acquisition as a function of the angular position signal provided by the transducer 74.

Having defined the angular "start" and "stop" positions, the cyclic compression-expansion phase sequence of each cylinder is determined. This sequence is memorised in the memory 89 and used by the unit 88, during one engine cycle and by comparing the received ultrasonic signals with a predetermined reference threshold, both to recognise whether seal losses have occurred due to valve and/or piston ring wear or to anomalous contact between the valves and tappets, and to identify which valve and/or piston ring has manifested the said undue sealing losses.

Having made the identification, the unit 88 feeds a signal to the unit 90 to display the number of the cylinder to which the valve (intake and/or exhaust) and/or piston rings pertain, and possibly also whether the measured abnormality is due to the intake and/or exhaust valve and/or to the piston rings of said cylinder. The advantages of the aforesaid method and device are apparent from an examination of their characteristics.

Firstly, it is apparent that identification of the seepage can be made simply and rapidly, it being necessary in this respect only to arrange the transducers 71, 72, 73 and 74 in the required positions and cause the engine to undergo at least one complete cycle, for example using the starter motor, but without providing any feed to the engine.

The use of the filter 86 considerably enhances the signal/noise ratio of the electrical signal transmitted to the unit 88. In this respect, the filter 86 eliminates practically all low-frequency disturbances (from about 50 Hz to about 20 Hz) present in the regions in which the transducers are positioned, and allows only the signal useful for subsequent processing to pass. In a different embodiment of the present invention a device could be used comprising a single ultrasonic transducer, which would be utilised to selectively check the sealing of the intake valves, then the sealing of the exhaust valves and finally the sealing of the piston rings.

A device could also be used provided with three independent ultrasonic detection channels, the transducers of which are arranged as indicated in Figure 3 to feed three separate inputs of the processing unit 91, which sequentially acquires and memorises the signals from said transducers.

## Claims

1. A method for checking the sealing of the valves and/or piston rings of each cylinder of an internal combustion engine, said cylinder comprising a combustion chamber in which there are located at least one first valve and at least one second valve mobile within respective seats and which externally communicates through said seats with a first duct and with a second duct respectively, and further comprising a piston provided with respective piston rings, characterised by comprising the following operations in sequence:

   -causing said engine to undergo at least one complete cycle without the engine being fed, in order to cyclically induce an overpressure in the combustion chamber of each said cylinder; and

   -measuring, in said intake duct and/or in said exhaust duct and/or in a compartment communicating with that portion of said piston distant from said combustion chamber with respect to said piston rings, the intensity of an ultrasonic signal generated by the effect of an undue seepage of pressurised air between said combustion chamber and said intake duct and/or said exhaust duct and/or said compartment, through said seats and through said piston rings respectively.

2. A method as claimed in claim 1 in which said engine is mounted in a vehicle, characterised in that said at least one complete cycle of said engine is executed by means of the starter motor of said vehicle.

3. A method as claimed in claim 1 or 2, characterised by comprising an operation involving correlating said ultrasonic

4. A device for checking the sealing of the valves and piston rings of each cylinder of an internal combustion engine, said cylinder comprising a combustion chamber in which there are located at least one first valve and at least one second valve mobile within respective seats and which externally communicates through said seats with a first duct and with a second duct respectively, and further comprising a piston provided with respective piston rings, characterised by comprising:

   -first means (71, 72, 73) to be connected to said ducts (51, 57) and to a compartment (63) communicating with that portion (61) of each said piston distant from said combustion chamber (31, 32, 33, 34, 35, 36) with respect to said piston rings (62), in order to measure the intensity of an ultrasonic signal which propagates within them by way of the seats of said valves (11, 12, ...., 16; 21, 22, ..., 26) and by way of said piston rings (62) respectively;

   -second means (66) to be connected to a member (66) of said engine (9) which moves synchronously with said cylinders (1, 2, 3, 4, 5, 6) and capable of measuring angular position; and

   -third means (91) connected to said first means (71, 72, 73) and to said second means (74) to provide an indication of the presence of said ultrasonic signal and from which valve and/or piston rings of the respective cylinder (1, 2, 3, 4, 5, 6) it originates.

5. A device as claimed in claim 4, characterised in that said first means (71, 72, 73) consist essentially of at least one transducer which converts an ultrasonic signal into an electrical signal.

6. A device as claimed in claim 5, characterised in that said transducer is sensitive essentially between 35 kHz and 45 kHz.

7. A device as claimed in at least one of claims 4 to 6, characterised in that said second means (74) consist essentially of an element for measuring the angular position of a rotating element which makes one complete revolution for each engine cycle.

8. A device as claimed in claim 7, characterised in that said rotating element consists essentially of the camshaft (66) of said engine (9).

9. A device as claimed in at least one of claims 4 to 8, characterised in that said third means (91) comprise at least one filter (86) arranged to intercept predetermined frequency components of an electrical signal generated by said first means (71, 72, 73) an dependent on said ultrasonic signal.

## Patentansprüche

1. Verfahren zur Kontrolle der Abdichtung der Ventile und/oder Kolbenringe jedes Zylinders einer Brennkraftmaschine, welcher Zylinder eine Brennkammer umfaßt, in der sich wenigstens ein erstes und ein zweites Ventil befindet, die innerhalb ihrer jeweiligen Sitze beweglich sind und die nach außen durch die Sitze hindurch mit einer ersten und zweiten Leitung in Verbindung stehen, und mit einem Kolben mit Kolbenringen, **gekennzeichnet** durch die folgenden, nacheinander durchgeführten Schritte:

-Verursachung des Ablaufs wenigstens eines vollständigen Maschinenzyklus ohne Zufuhr zu der Maschine zur zyklischen Erzeugung eines Überdrucks in der Brennkammer jedes Zylinders und

-Messung, innerhalb der Einlaß- und/oder Auslaßleitung und/oder in einem Raum, der mit dem Teil des Kolbens in Verbindung steht, der von der Brennkammer in bezug auf die Kolbenringe entfernt ist, der Intensität eines Ultraschallsignals, das erzeugt wird durch den Effekt eines unangemessenen Leckverlusts von unter Druck stehender Luft zwischen der Brennkammer und der Einlaß- und/oder Auslaßleitung und/oder dem Raum über die Ventilsitze und Kolbenringe hinweg.

2. Verfahren nach Anspruch 1, bei dem die Maschine in einem Fahrzeug montiert ist, dadurch **gekennzeichnet**, daß der wenigstens eine vollständige Zyklus der Maschine mit Hilfe des Anlassermotors des Fahrzeugs erzeugt wird.

3. Verfahren nach Anspruch 1 oder 2, **gekennzeichnet** durch eine Betriebsweise, bei der das Ultraschallsignal mit einem Signal korreliert wird, das von der Position des Kolbens der Maschine während des vollständigen Zyklus abhängt.

4. Vorrichtung zum Kontrollieren der Abdichtung der Ventile und Kolbenringe jedes Zylinders einer Brennkraftmaschine, welcher Zylinder eine Brennkammer umfaßt, in der wenigstens ein erstes und ein zweites Ventil angeordnet ist, die innerhalb entsprechender Sitze beweglich sind und nach außen durch die Sitze hindurch mit einer ersten und einer zweiten Leitung in Verbindung stehen, und mit einem Kolben mit Kolbenringen, **gekennzeichnet** durch

-eine erste Einrichtung (71,72,73) zum Verbinden mit den Leitungen (51,57) und einem Raum (63), der mit dem Bereich (61) jedes Kolbens in Verbindung steht, der von der Brennkammer (31,32,33,34,35,36) in bezug auf die Kolbenringe (62) entfernt ist, zum Messen der Intensität eines Ultraschallsignals, das sich ausbreitet in diesen durch die Sitze der Ventile (11, 12 ... 16; 21, 22, ... 26) und durch die Kolbenringe (62) hindurch,

-eine zweite Einrichtung (66) in Verbindung mit einem Teil (66) der Maschine (9), das sich synchron mit den Zylindern (1,2,3,4,5,6) bewegt und in der Lage ist, die Winkelstellung zu messen, und

-eine dritte Einrichtung (91) in Verbindung mit der ersten Einrichtung (71,72,73) und der zweiten Einrichtung (74) zum Anzeigen der Anwesenheit des Ultraschallsignals sowie der Tatsache, von welchem Ventil und/oder Kolbenring des jeweiligen Zylinders (1,2,3,4,5,6) es herrührt.

5. Vorrichtung nach Anspruch 4, dadurch **gekennzeichnet**, daß die erste Einrichtung (71, 72, 73) im wesentlichen aus wenigstens einem Wandler besteht, der ein Ultraschallsignal in ein elektrisches Signal umwandelt.

6. Vorrichtung nach Anspruch 5, dadurch **gekennzeichnet**, daß der Wandler im wesentlichen auf den Bereich zwischen 35 und 45 kHz anspricht.

7. Vorrichtung nach wenigstens einem der Ansprüche 4 bis 6, dadurch **gekennzeichnet**, daß die zweite Einrichtung (74) im wesentlichen aus einem Element zum Messen der Winkelposition eines sich drehenden Elements besteht, das eine vollständige Drehung bei jedem Zyklus der Maschine durchführt.

8. Vorrichtung nach Anspruch 7, dadurch **gekennzeichnet**, daß das sich drehende Element im wesentlichen aus der Nockenwelle (66) der Maschine (9) besteht.

9. Vorrichtung nach wenigstens einem der Ansprüche 4 bis 8, dadurch **gekennzeichnet**, daß die dritte Einrichtung (91) wenigstens ein Filter (86) umfaßt, das vorgegebene Frequenzbestandteile eines elektrischen Signals herausfiltert, das durch die erste Einrichtung (71,72,73) erzeugt wird und von dem Ultraschallsignal abhängig ist.

**Revendications**

1. Procédé de contrôle de l'étanchéité des soupapes et/ou des segments de piston de chaque cylindre d'un moteur à combustion interne, ledit cylindre comportant une chambre de combustion dans laquelle se trouvent au moins une première soupape et au moins une deuxième soupape mobiles dans des sièges respectifs et qui communique vers l'extérieur par l'intermédiaire desdits sièges avec une première tubulure et avec une deuxième tubulure respectivement, et comportant en outre un piston pourvu de segments de piston respectifs, caractérisé en ce qu'il comporte les opérations suivantes en série :

-amener ledit moteur à subir au moins un cycle complet sans que le moteur soit alimenté, afin d'engendrer de manière cyclique une surpression dans la chambre de combustion de chacun desdits cylindres ; et

-mesurer, dans ladite tubulure d'admission et/ou dans ladite tubulure d'échappement et/ou dans un compartiment communiquant avec la partie dudit piston qui est éloignée de ladite chambre de combustion par rapport auxdits segments de piston, l'intensité d'un signal ultrasonore généré par l'effet d'une fuite indésirable d'air sous pression entre ladite chambre de combustion et ladite tubulure d'admission et/ou ladite tubulure d'échappement et/ou ledit compartiment par lesdits sièges et par lesdits segments de piston respectivement.

2. Procédé selon la revendication 1 dans lequel ledit moteur est monté dans un véhicule, caractérisé en ce qu'au moins ledit cycle complet dudit moteur est exécuté au moyen du démarreur dudit véhicule.

3. Procédé selon la revendication 1 ou 2, caractérisé en ce qu'il comporte une opération impliquant une corrélation dudit signal ultrasonore avec un signal fonction de la position des pistons dudit moteur pendant ledit cycle complet.

4. Dispositif destiné à contrôler l'étanchéité des soupapes et des segments de piston de chaque cylindre d'un moteur à combustion interne, ledit cylindre comportant une chambre de combustion dans laquelle se trouvent au moins une première soupape et au moins une deuxième soupape mobiles dans des sièges respectifs et qui communique vers l'extérieur par l'intermédiaire desdits sièges avec une première tubulure et avec une deuxième tubulure respectivement, et comportant en outre un piston pourvu de segments de piston respectifs, caractérisé en ce qu'il comporte :

-des premiers moyens (71, 72, 73) devant être reliés auxdites tubulures (51, 57) et à un compartiment (63) communiquant avec la partie (61) de chacun desdits pistons éloignée de ladite chambre de combustion (31, 32, 33, 34, 35, 36) par rapport auxdits segments de piston (62), afin de mesurer l'intensité d'un signal ultrasonore qui se propage à l'intérieur de ceux-ci par les sièges desdites soupapes (11, 12, ..., 16); (21, 22, ..., 26) et par lesdits segments de piston (62) respectivement;

-des seconds moyens (66) devant être reliés à un élément (66) dudit moteur (9) qui se déplace en synchronisme avec lesdits cylindres (1, 2, 3, 4, 5, 6) et capables de mesurer une position angulaire; et

-des troisièmes moyens (91) reliés auxdits premiers moyens (71, 72, 73) et auxdits seconds moyens (74) afin de fournir une indication de la présence dudit signal ultrasonore et de quelle soupape et/ou de quels segments de piston du cylindre respectif (1, 2, 3, 4, 5, 6) il provient.

5. Dispositif selon la revendication 4, caractérisé en ce que lesdits premiers moyens (71, 72, 73) consistent essentiellement en au moins un transducteur qui convertit un signal ultrasonore en un signal électrique.

6. Dispositif selon la revendication 5, caractérisé en ce que ledit transducteur est sensible essentiellement entre 35 kHz et 45 kHz.

7. Dispositif selon au moins une des revendications 4 à 6, caractérisé en que lesdits seconds moyens (74) consistent essentiellement en un élément destiné à mesurer la position angulaire d'un élément rotatif qui réalise un tour complet pour chaque cycle du moteur.

8. Dispositif selon la revendication 7, caractérisé en ce que ledit élément rotatif se compose essentiellement de l'arbre à came (66) dudit moteur (9).

9. Dispositif selon au moins une des revendications 4 à 8, caractérisé en ce que lesdits troisièmes moyens (91) comportent au moins un filtre (86) prévu pour intercepter des composantes de fréquence prédéterminées d'un signal électrique généré par lesdits premiers moyens (71, 72, 73) en fonction dudit signal électrique.

Fig.1

Fig. 2

EP 0 358 233 B1

Fig.3

Fig.4